# EUROPÄISCHE PATENTANMELDUNG

(11) **EP 4 822 237 A1**
(43) Veröffentlichungstag der Anmeldung: **14.10.2026**
(21) Anmeldenummer: 25170173.6
(22) Anmeldetag: 11.04.2025
(51) Int. Cl.: F16P 3/14

(54) **VORRICHTUNG UND VERFAHREN ZUM ÜBERWACHEN EINER GEFÄHRLICHEN ANLAGE**

(71) Anmelder: Pepperl+Fuchs SE, 68307 Mannheim (DE)
(72) Erfinder: LOHMANN, Lutz, 68307 Mannheim (DE)
(74) Vertreter: Schiffer, Axel Martin

(57) **Zusammenfassung**

Die Erfindung betrifft eine Vorrichtung zum Überwachen einer gefährlichen Anlage, mit einer Sensoreinrichtung zum Erfassen eines Schutzbereichs der gefährlichen Anlage, wobei die Sensoreinrichtung eingerichtet ist zum Ausgeben mindestens von Objektfeststellungssignalen, wenn Objekte in dem Schutzbereich festgestellt werden, mit einer externen Überbrückungseinheit, die mit der Sensoreinrichtung verbunden ist und mindestens eingerichtet ist zum Analysieren der Objektfeststellungssignale, zum Analysieren von Statussignalen, welche die gefährliche Anlage betreffen, zum Generieren von Steuersignalen für die gefährliche Anlage abhängig mindestens von den Objektfeststellungssignalen und den Statussignalen. Die Vorrichtung ist erfindungsgemäß dadurch gekennzeichnet, dass die externe Überbrückungseinheit eingerichtet ist zum Übertragen der Steuersignale an die gefährliche Anlage oder eine Steuerung der gefährlichen Anlage. Die Erfindung betrifft außerdem ein Verfahren zum Überwachen einer gefährlichen Anlage.

## Beschreibung

Die Erfindung betrifft in einem ersten Gesichtspunkt eine Vorrichtung zum Überwachen einer gefährlichen Anlage nach dem Oberbegriff des Anspruchs 1. In einem weiteren Gesichtspunkt bezieht sich die Erfindung auf ein Verfahren zum Überwachen einer gefährlichen Anlage nach dem Oberbegriff des Anspruchs 19.

Eine gattungsgemäße Vorrichtung ist beispielsweise in EP 3910228 B1 beschrieben und weist mindestens folgende Bestandteile auf: eine Sensoreinrichtung zum Erfassen eines Schutzbereichs der gefährlichen Anlage, wobei die Sensoreinrichtung eingerichtet ist zum Ausgeben mindestens von Objektfeststellungssignalen, wenn Objekte in dem Schutzbereich festgestellt werden, und eine externe Überbrückungseinheit, die mit der Sensoreinrichtung verbunden ist und eingerichtet ist zum Analysieren der Objektfeststellungssignale, zum Analysieren von Statussignalen, welche die gefährliche Anlage betreffen und zum Generieren von Steuersignalen für die gefährliche Anlage abhängig mindestens von den Objektfeststellungssignalen und den Statussignalen.

Bei einem gattungsgemäßen Verfahren erfasst eine Sensoreinrichtung mindestens teilweise den Schutzbereich der gefährlichen Anlage, die Sensoreinrichtung gibt Objektfeststellungssignale aus, wenn Objekte im Schutzbereich festgestellt werden und eine mit der Sensoreinrichtung verbundene externe Überbrückungseinheit analysiert die Objektfeststellungssignale und Statussignale, welche die gefährliche Anlage betreffen, und generiert, abhängig mindestens von den Objektfeststellungssignalen und den Statussignalen, Steuersignale für die gefährliche Anlage. Ein gattungsgemäßes Verfahren ist ebenfalls in EP 3910228 B1 beschrieben.

Generell erlaubt eine sogenannte Muting-Funktionalität eines Sicherheitssystems den Zugang von Material oder, allgemein, Objekten in einen Gefahrenbereich, ohne eine gefahrbringende Bewegung einer Anlage, beispielsweise einer Maschine, trotz aktivierter Sicherheitsschutzeinrichtung, abzuschalten. Diejenigen Objekte, für die das möglich sein soll, werden auch als zu "mutende" Objekte bezeichnet. Diese Funktionalität ist in internationalen Safety-Standards verankert und beispielsweise in der Norm IEC 62046 beschrieben. Werden die zu mutenden Objekte von speziell angeordneten optischen Zusatzsensoren erkannt, ist es zulässig, die Sicherheitsfunktion der Schutzeinrichtung zu deaktivieren, d.h. zu "muten".

Bei einem Standard-Muting-System werden mindestens zwei optische Muting-Sensoren (z.B. Lichtschranken) als Signalgeber für die Erfassung der zu mutenden Objekte verwendet. In einer Überbrückungseinheit, die eine Muting-Logik des zu mutenden Sicherheitssystems beinhaltet, werden die Sensorsignale auf "Gültigkeit" einer Muting-Bedingung geprüft. Wenn sich ein zulässiges Muting-Objekt (z.B. eine Transportpalette) in den Gefahrenbereich der Anlage hineinbewegt und die Muting-Bedingung erfüllt ist, wird das Abschalten der Anlage ausgesetzt und der normale Prozess der Anlage kann weiterlaufen. Die Muting-Logik kann im optischen Sicherheitssensor selbst integriert oder in einem externen Sicherheitsmodul realisiert werden.

Beim sogenannten "sensorlosen Muting" werden die Signale der zusätzlichen Muting-Sensoren eines Standard-Muting-Systems durch zwei voneinander unabhängige und ohne zusätzliche Muting Sensoren erzeugte "Muting-Enable-Signale" ersetzt. Diese Signale können beispielsweise wie folgt generiert werden: ein erstes Signal, das Muting-Enable-1-Signal, wird vom optischen Sicherheitssensor selbst abgeleitet. Eine Objekt-Unterbrechung im gesamten oder in Teilen des Schutzfelds des optischen Sensors (z.B. ein Lichtvorhang) generiert das Signal und ein zweites Signal, das Muting-Enable-2-Signal, wird von einer Steuerung (Anlagen-/Prozesssteuerung) erzeugt. In der Steuerung ist Information vorhanden über Ort und Zeitpunkt, wann und wo sich ein zulässiges Muting-Objekt, z.B. ein Transportgut, an der Gefahrenstelle befinden darf. Beispielsweise kann die Objekterfassung über einen Transponder an dem zu mutenden Objekt erfolgen, der von der Anlagensteuerung an einem definierten Ort in der Nähe der Gefahrenstelle ausgewertet wird. Das Muting-Enable-2-Signal darf dabei aus Sicherheitsgründen nicht von einem zu schützenden Menschen ausgelöst werden können.

Die beiden Muting-Enable-Signale werden in der Überbrückungseinheit erfasst und hinsichtlich ihrer zeitlichen Abhängigkeit analysiert. Beispielsweise können eine minimale und eine maximale Zeitdifferenz und eine Reihenfolge der Signalisierung analysiert werden. Die zeitliche Abhängigkeit ist vom Prozess, der Art der Erfassung beider Muting-Enable-Signale sowie von einer Bewegungsrichtung der Objekte abhängig. Signale, die ein zulässiges Muting-Objekt repräsentieren, erfüllen die sogenannte Muting-Bedingung.

Ein OSSD-Signal ist ein elektrisches Ausgangssignal, das beispielsweise von einem Sicherheitslichtvorhang erzeugt wird, um den Sicherheitsstatus des Systems anzuzeigen. Typischerweise gibt es zwei OSSD-Signale: OSSD1 und OSSD2. Diese Signale dienen beispielsweise dazu, die Schaltzustände eines Lichtvorhangs zu überwachen und können von übergeordneten Sicherheitssteuerungen oder anderen sicherheitsrelevanten Systemen interpretiert werden. Die Verwendung von OSSD-Signalen ermöglicht eine sichere Kommunikation zwischen dem Sicherheitslichtvorhang und anderen Teilen des Sicherheitssystems. Die Zustände der OSSD-Signale können verwendet werden, um festzustellen, ob der Lichtvorhang ordnungsgemäß arbeitet oder ob eine Sicherheitsverletzung vorliegt. Wenn beispielsweise ein Hindernis den Lichtvorhang durchbricht, kann das zu einem Schaltzustand führen, der von den OSSD-Signalen dargestellt wird, und das Sicherheitssystem kann entsprechende Maßnahmen ergreifen, um Gefahren zu minimieren. Eine genaue Definition und Spezifikation von OSSD kann je nach Anwendung und Sicherheitsnorm variieren. Die allgemeine Funktion bleibt in der Regel ähnlich.

IO-Link Safety ist eine neue Möglichkeit, über IO-Link automatisierte Maschinen und Anlagen um funktional sichere Komponenten und Kommunikation zu erweitern. Zu den bisherigen "Mastern" können jetzt "FS-Master" und zu den "Devices" können "FS-Devices" hinzukommen. Die Anschluss- und Übertragungstechniken von IO-Link sind unverändert nutzbar. Damit lassen sich Sicherheitsfunktionen einfach realisieren. IO-Link Safety ist ebenfalls standardisiert in IEC 61139-2.

Als eine Aufgabe der Erfindung kann angesehen werden, eine Vorrichtung und ein Verfahren zum Überwachen einer gefährlichen Anlage anzugeben, bei denen im Vergleich zum Stand der Technik kostengünstigere Komponenten verwendet werden können und bei denen Vorteile im Hinblick auf die Skalierbarkeit erreicht werden.

Diese Aufgabe wird durch die Vorrichtung mit den Merkmalen des Anspruchs 1 und durch das Verfahren mit den Merkmalen des Anspruchs 19 gelöst.

Die Vorrichtung der oben angegebenen Art ist erfindungsgemäß dadurch weitergebildet, dass die externe Überbrückungseinheit eingerichtet ist zum Übertragen der Steuersignale an die gefährliche Anlage oder eine Steuerung der gefährlichen Anlage.

Das Verfahren der oben angegebenen Art ist erfindungsgemäß dadurch weitergebildet, dass die externe Überbrückungseinheit die Steuersignale, insbesondere direkt, an die gefährliche Anlage oder eine Steuerung der gefährlichen Anlage überträgt.

Bevorzugte Ausführungsbeispiele der erfindungsgemäßen Vorrichtung und vorteilhafte Ausführungsvarianten des erfindungsgemäßen Verfahrens werden im Folgenden, insbesondere im Zusammenhang mit den abhängigen Ansprüchen und den Figuren beschrieben. Die erfindungsgemäße Vorrichtung kann mehrere Module oder Baueinheiten aufweisen, die örtlich voneinander getrennt angeordnet sein können. Mit dem Begriff des Schutzbereichs wird ein räumlicher Bereich in der Umgebung der zu überwachenden gefährlichen Anlage bezeichnet, in dem, insbesondere für Benutzer, Gefahr besteht. Der Schutzbereich kann auch als Schutzfeld bezeichnet werden. Zweck der erfindungsgemäßen Vorrichtung und des erfindungsgemäßen Verfahrens ist es, einerseits möglichst zu verhindern, dass es in dem Schutzbereich zu unerwünschten Einwirkungen auf Objekte und Benutzer kommt, andererseits aber unnötige Unterbrechungen von Anlagenprozessen zu vermeiden, wenn sich zulässige Objekte bestimmungsgemäß im Schutzbereich befinden. Bei der gefährlichen Anlage kann es sich insbesondere um eine Maschine, etwa eine metallbearbeitende Maschine, beispielsweise eine Blechumformungsmaschine, handeln. Bei einer Blechumformungsmaschine ist ein Schutzbereich insbesondere derjenige Bereich, in dem ein umzuformendes Blech zugeführt wird und in dem die Formwerkzeuge auf das umzuformende Blech einwirken. Der Begriff der Anlage kann auch eine Steuerung der Anlage mitumfassen. Die Sensoreinrichtung kann grundsätzlich jedwede Sensoren aufweisen, die es ermöglichen, Objekte in einem Überwachungsbereich zu detektieren. Objektfeststellungsignale, sind diejenigen Signale, die die Sensoreinrichtung abgibt und die anzeigen, dass sich in einem Überwachungsbereich der Sensoreinrichtung ein Objekt befindet und somit anzeigen, dass ein Objekt in dem Schutzbereich der Anlage festgestellt wurde. Mit dem Begriff der externen Überbrückungseinheit ist insbesondere ein separates elektronisches Modul gemeint, welches als separate Baueinheit ausgeführt sein kann. Statussignale, welche die gefährliche Anlage betreffen, sind insbesondere solche Signale, die eine Information darüber enthalten, ob der Anlage zu einem bestimmten Zeitpunkt ein zu verarbeitendes Materialstück oder ein zu bearbeitendes Objekt zugeführt werden kann. Die Überbrückungseinheit kann insbesondere verwirklicht sein durch eine sichere externe Hardware, welche eine Muting-Logik, die auch als sensorlose Muting-Funktionalität, bezeichnet werden kann, beinhaltet.

Als eine wesentliche Idee der vorliegenden Erfindung kann angesehen werden, die logische Funktionalität, auf deren Grundlage sicherheitsgerichtete Steuersignale an die zu überwachende gefährliche Anlage übermittelt oder unterdrückt werden, nicht mehr, wie im Stand der Technik, in der Sensoreinrichtung, welche den Schutzbereich der gefährlichen Anlage überwacht, sondern in der externen Überbrückungseinheit zu installieren und die Steuersignale auch über die Überbrückungseinheit an die Anlage zu übermitteln.

Durch diese Maßnahme können zahlreiche Vorteile erreicht werden. Zunächst handelt es sich um ein sensorloses Muting-Verfahren, sodass zusätzliche Sensoren zur Überwachung des Schutzbereichs von vornherein nicht notwendig sind. Dadurch werden ein geringerer Installationsaufwand und Kostenersparnisse erreicht. Weiterhin wird im Vergleich zu Lösungen des Stands der Technik weniger Bauraum beansprucht, sodass auch neue Absicherungskonzepte möglich werden. Außerdem ermöglicht die vorliegende Erfindung den Einsatz von einfachen und mithin preiswerten Standard-Sicherheitssensoren für die Sensoreinrichtung, die für sich genommen keine Muting-Funktionalität aufweisen müssen. Die im Folgenden in Ausführungsbeispielen beschriebene externe sensorlose Überbrückungseinheit, die insbesondere zentralisiert für eine Mehrzahl von Anlagen oder Maschinen gestaltet sein kann, hat darüber hinaus weitere bedeutsame Vorteile.

Zunächst erlaubt die externe Überbrückungseinheit eine Umsetzung eines Systemgedankens zur Lösung von Sicherheitsapplikationen. Beispielsweise wird eine zentrale Wartung und Instandhaltung von vielen Sensoreinrichtungen und überwachten Anlagen oder Maschinen ermöglicht. Weiterhin erlaubt die hier beschriebene Erfindung, den Anschluss von mehreren Sicherheitssensoren, mithin mehreren Sensoreinrichtungen, an eine zentrale Steuerung, nämlich die externe Überbrückungseinheit. Sodann ermöglicht die vorliegende Erfindung eine Standardisierung von Konfigurationen und Parametrisierungen über die externe Überbrückungseinheit. Schließlich werden sogenannte Safety-Stopp-Kategorien verfügbar, beispielsweise eine sichere Langsamfahrt für eine Maschine. Weitere Beispiele dazu werden im Folgenden erläutert. Sodann können mit der vorliegenden Erfindung mehrere Sensoreinrichtungen, mithin auch multisensorielle Systeme, mit ein und derselben Überbrückungseinheit gesteuert werden. Beispielsweise können Lichtvorhänge in Kombination mit einem scannenden optischen Sensor von ein und derselben Überbrückungseinheit gesteuert werden.

Die erfindungsgemäße Vorrichtung kann insbesondere zum Durchführen des erfindungsgemäßen Verfahrens oder von einer der hier beschriebenen Ausführungsvarianten des erfindungsgemäßen Verfahrens eingerichtet sein. Das erfindungsgemäße Verfahren kann insbesondere unter Verwendung der erfindungsgemäßen Vorrichtung oder unter Verwendung eines der hier beschriebenen Ausführungsbeispiele der erfindungsgemäßen Vorrichtung durchgeführt werden.

Bei einem bevorzugten Ausführungsbeispiel ist die externe Überbrückungseinheit eingerichtet zum direkten Übertragen der Steuersignale an die gefährliche Anlage oder die Steuerung der gefährlichen Anlage.

Bei einem bevorzugten Ausführungsbeispiel ist die Überbrückungseinheit eingerichtet zum ausschließlichen Übertragen der Steuersignale an die gefährliche Anlage oder die Steuerung der gefährlichen Anlage. Das bedeutet, dass das Übertragen der Steuersignale an die gefährliche Anlage oder die Steuerung der gefährlichen Anlage ausschließlich über die Überbrückungseinheit und mithin nicht über die Sensoreinrichtung erfolgt.

Die Überbrückungseinheit kann vorteilhaft dieselben Sicherheitslevel wie ein übergeordnetes Sicherheitssystem, beispielsweise die Sicherheitslevel PLc bis PLe nach EN/ISO 13849, erfüllen.

Bei einem bevorzugten Ausführungsbeispiel kann die Überbrückungseinheit mindestens eine der folgenden Eigenschaften verwirklichen: die Überbrückungseinheit ist als selbständiges Gerät gebildet; die Überbrückungseinheit ist als separates Sicherheitsmodul gebildet; die Überbrückungseinheit ist in einem externen Sicherheitsmodul gebildet; die Überbrückungseinheit ist in einem Sicherheitsinterface gebildet; die Überbrückungseinheit ist in einem Sicherheitsgateway gebildet; die Überbrückungseinheit ist in einem Sicherheitsmaster gebildet; die Überbrückungseinheit ist in einer Sicherheitssteuerung gebildet; die Überbrückungseinheit ist in einer sicheren Anlagensteuerung oder einer sicheren Prozesssteuerung gebildet.

Bevorzugt erfüllt die Überbrückungseinheit die, insbesondere normierten, Anforderungen an ein sicheres Gerät oder die Überbrückungseinheit ist eine sichere Überbrückungseinheit.

Zum Bereitstellen der Funktionalität betreffend das Analysieren der Objektfeststellungsignale der Sensoreinrichtung, der Statussignale der Anlage und gegebenenfalls von weiteren Signalen, weist die Überbrückungseinheit bevorzugt eine logische Einheit, beispielsweise einen Mikrocontroller oder eine vergleichbare programmierbare logische Komponente, auf.

Die Überbrückungseinheit kann vorteilhaft dazu eingerichtet sein, auf Grundlage des ersten Sicherheitssignals und des zweiten Sicherheitssignals eine Sicherheitsbedingung zu prüfen und ein Steuersignal an die gefährliche Anlage oder die Steuerung der gefährlichen Anlage dann, insbesondere genau oder nur dann, zu übertragen, wenn die Sicherheitsbedingung nicht erfüllt ist. Bei einem bevorzugten Ausführungsbeispiel ist die Überbrückungseinheit dazu eingerichtet, ein Steuersignal, welches die Anlage in einen sicheren Zustand bringt, zu unterdrücken, wenn die folgenden Bedingungen erfüllt sind: die Überbrückungseinheit erhält von der Sensoreinrichtung ein erstes Sicherheitssignal, die Überbrückungseinheit erhält von der Anlage ein zweites Sicherheitssignal, das erste Sicherheitssignal und das zweite Sicherheitssignal, erfüllen eine Sicherheitsbedingung. Die Sicherheitsbedingung kann auch als Muting-Bedingung bezeichnet werden. Eine Logik in der Überbrückungseinheit, welche die Sicherheitsbedingung überprüft, kann auch als Muting-Logik bezeichnet werden.

Wenn beispielsweise die beiden Muting-Enable-Signale, also das erste Sicherheitssignal und das zweite Sicherheitssignal, eine definierte zeitliche Abhängigkeit aufweisen und somit ein zulässiges Muting-Objekt repräsentieren, kann die Muting-Bedingung als erfüllt angesehen werden, und die Überbrückungseinheit kann das Muting auslösen.

Die Überbrückungseinheit, inklusive Muting-Logik, kann das Steuersignal erzeugen und kann, abhängig davon, ob die Muting-Bedingung erfüllt ist, die Anlage in einen sicheren Zustand steuern oder kann den jeweiligen Prozess der Anlage weiterlaufen lassen.

Die Überbrückungseinheit kann bevorzugt dazu eingerichtet sein, für das Prüfen der Sicherheitsbedingung eine oder mehrere der folgenden Eigenschaften zu bewerten:
- eine Zeitdifferenz zwischen dem ersten Sicherheitssignal und dem zweiten Sicherheitssignal,
- eine Zeitdifferenz zwischen einem Start des ersten Sicherheitssignals und einem Ende des ersten Sicherheitssignals,
- eine Zeitdifferenz zwischen einem Start des zweiten Sicherheitssignals und einem Ende des zweiten Sicherheitssignals,
- eine Zeitdifferenz zwischen einem Start des ersten Sicherheitssignals und einem Start des zweiten Sicherheitssignals,
- eine Zeitdifferenz zwischen einem Ende des ersten Sicherheitssignals und einem Ende des zweiten Sicherheitssignals,
- eine Zeitdifferenz zwischen einem Start des ersten Sicherheitssignals und einem Ende des zweiten Sicherheitssignals,
- eine Zeitdifferenz zwischen einem Ende des ersten Sicherheitssignals und einem Start des zweiten Sicherheitssignals,
- eine zeitliche Reihenfolge des ersten Sicherheitssignals und des zweiten Sicherheitssignals.

Die Überbrückungseinheit kann vorteilhaft dazu eingerichtet sein, die erfindungsgemäße Funktionalität für mehrere Sensoreinrichtungen und mehrere Anlagen bereitzustellen. Bei einer weiteren bevorzugten Ausgestaltung ist die Überbrückungseinheit dazu eingerichtet, Parameter für die Sicherheitsbedingung, beispielsweise zeitliche Differenzen des ersten Sicherheitssignals und des zweiten Sicherheitssignals, zeitliche Reihenfolge des ersten Sicherheitssignals und des zweiten Sicherheitssignals, zeitliche Verzögerungen des ersten Sicherheitssignals und/oder des zweiten Sicherheitssignals, für mehrere an die Überbrückungseinheit angeschlossene Sensoreinrichtungen und mehrere Anlagen zu konfigurieren und zu speichern. Zu diesem Zweck kann die Überbrückungseinheit einen Speicher aufweisen. Beispielsweise kann hierzu ein Speicher eines in der Überbrückungseinheit vorhandenen Mikrocontrollers zum Einsatz kommen.

Bei einem einfachen Ausführungsbeispiel können das Objektfeststellungssignal und das erste Sicherheitssignal ein und dasselbe Signal sein. Diese Variante kommt insbesondere in Betracht, wenn das erste Sicherheitssignal von einem gesamten Schutzbereich abgeleitet wird. Es ist aber auch möglich, dass das Objektfeststellungssignal und das erste Sicherheitssignal separate Signale sind.

Das zweite Sicherheitssignal ist ein Statussignal, dass von der Anlage oder der Anlagensteuerung aufgrund von Information über einen Status der Anlage, insbesondere einen Prozess der Anlage, ausgegeben werden kann. Das zweite Sicherheitssignal kann auch als virtuelles Muting-Sensorsignal bezeichnet werden.

Bei einem weiteren bevorzugten Ausführungsbeispiel weist die Überbrückungseinheit, insbesondere zur Synchronisation mit einem Prozess der Anlage, eine erste Verzögerungseinheit zum Verzögern des Steuersignals und/oder eine zweite Verzögerungseinheit zum Verzögern des zweiten Sicherheitssignals auf. Bevorzugt kann bei der ersten Verzögerungseinheit und/oder bei der zweiten Verzögerungseinheit eine Verzögerungszeit jeweils separat einstellbar sein.

Bei einem weiteren bevorzugten Ausführungsbeispiel weist die Überbrückungseinheit zum Konfigurieren von Parametern für eine Sicherheitsbedingung eine Verbindungsschnittstelle, insbesondere zu einer übergeordneten Steuerung, auf. Beispielsweise kann die Verbindungsschnittstelle mindestens eine der folgenden Einrichtungen aufweisen: Sicherheitssensorinterface, beispielsweise mit Hilfe eines Konfigurationstools über IOL-Safety, ein Anlageninterface, beispielsweise Profinet-Safety, und/oder ein separates Interface an der Überbrückungseinheit, beispielsweise eine USB-Schnittstelle.

Bei einer bevorzugten Ausführungsvariante enthält die Sensoreinrichtung keine logischen Einrichtungen, die Steuersignale für die Anlage generieren. Man kann auch sagen, dass die Sensoreinrichtung frei ist von solchen logischen Einrichtungen. Das bedeutet, dass Standard-Sicherheitssensoren für die Sensoreinrichtung verwendet und Kosten gespart werden können. Die Objektfeststellungsignale können Standardsignale am Ausgang eines Sensors der Sensoreinrichtung sein.

Die Sensoreinrichtung kann einen oder mehrere der folgenden Sensoren aufweisen: optischer Sensor, energetischer optischer Sensor, Lichtvorhang, Lichtschranke, Kamerasensor, eindimensional, zweidimensional oder dreidimensional scannender optischer Sensor, Ultraschallsensor, kapazitiver Sensor, induktiver Sensor, beispielsweise Näherungsschalter, abstandsmessender Sensor. Bevorzugt erfüllt die Sensoreinrichtung die, insbesondere normierten, Anforderungen an ein sicheres Gerät. Alternativ oder ergänzend kann mindestens einer der Sensoren der Sensoreinrichtung ein Sicherheitssensor sein. Vorteilhaft können auch mehrere oder alle Sensoren der Sensoreinrichtung Sicherheitssensoren sein.

Bei einer vorteilhaften Weiterbildung der erfindungsgemäßen Vorrichtung ist zwischen der Überbrückungseinheit und der Sensoreinrichtung eine bidirektionale Datenverbindung vorhanden, über welche eine Konfiguration der Sensoreinrichtung veränderbar ist. Eine Verbindung zwischen der Sensoreinrichtung und der Überbrückungseinheit kann eine oder mehrere oder eine Kombination von einer oder mehreren der folgenden Verbindungen aufweisen: sichere Schaltausgänge, OSSD; kabelgebundene Signalleitung, drahtgebundenes oder drahtloses Sicherheitsinterface mit Sicherheitsprotokoll.

Bei einer bevorzugten Variante des erfindungsgemäßen Verfahrens wird durch das Steuersignal eine gefährliche Aktivität der Anlage beendet oder abgeschaltet. Beispielsweise kann die Anlage durch das Steuersignal abgeschaltet werden. Das Steuersignal kann auch als Anlagenabschaltsignal bezeichnet werden.

Allgemein kann die Anlage durch ein Steuersignal, insbesondere in Abhängigkeit von Information über die Anlage und/oder einen in der Anlage laufenden Prozess, in einen sicheren Zustand gebracht werden. Beispielsweise kann die Anlage durch ein Steuersignal in einen Safety-Stopp-Zustand gebracht werden.

Das Verbringen in den sicheren Zustand und/oder der sichere Zustand kann oder können durch einen der folgenden Zustände oder eine der folgenden Maßnahmen verwirklicht werden: im Vergleich zu einem Normalbetrieb langsamere Bewegung von beweglichen Teilen der Anlage; Aufsuchen von ausgewählten Positionen und/oder sicheren Stellungen von beweglichen Teilen der Anlage; Verharren in ausgewählten Bewegungszuständen von beweglichen Teilen.

Weitere Varianten sind möglich, wenn ein Erfassungsbereich der Sensoreinrichtung konfigurierbar und veränderbar ist. Dann kann beispielsweise eine Größe und/oder eine räumliche Anordnung des Schutzbereichs eingestellt werden. Beispielsweise kann ein Objekt in unterschiedlichen Bereichen des Schutzbereichs differenziert nachgewiesen werden.

Es ist auch möglich, etwa bei Lichtvorhängen, dass die Objektfeststellungssignale Information über einen Ort eines Objekts innerhalb eines Schutzbereichs der Anlage enthalten. Die Überbrückungseinheit kann dann vorteilhaft auch dazu eingerichtet sein, das Steuersignal auch in Abhängigkeit der Information über einen Ort eines Objekts innerhalb eines Schutzbereichs zu generieren.

Bei einer weiteren vorteilhaften Ausgestaltung enthalten die Objektfeststellungssignale der Sensoreinrichtung Information über einen Ort eines Objekts innerhalb des Schutzbereichs. Die Überbrückungseinheit kann dann bevorzugt dazu eingerichtet sein, das das Steuersignal auch in Abhängigkeit der Information über einen Ort eines Objekts innerhalb des Schutzbereichs zu generieren. Die Überbrückungseinheit kann auch dazu eingerichtet sein, ein zulässiges Objekt einzulernen.

Dazu kann ein bestimmtes zu "mutendes" Objekt in den Schutzbereich gegeben werden und der Überbrückungseinheit kann dann mitgeteilt werden, dass bei Objekten dieser Art das erste Sicherheitssignal erzeugt werden soll.

Bei einer Ausführungsvariante ist die Sensoreinrichtung dazu eingerichtet, das erste Sicherheitssignal nur dann bereitzustellen, wenn sich ein Objekt in einem festzulegenden Teil des Schutzbereichs befindet und insbesondere nur in einem festzulegenden Teil des Schutzbereichs befindet. Das bedeutet, dass das Muting nur erfolgt, wenn das zulässige Objekt, mithin das zu "mutende" Objekt, sich in einem bestimmten Teil des Schutzbereichs befindet. Ergänzend oder alternativ kann die Sensoreinrichtung dazu eingerichtet oder konfiguriert sein, das erste Sicherheitssignal niemals bereitzustellen, wenn sich ein Objekt in einem anderen festzulegenden Teil des Schutzbereichs befindet.

In einem Anwendungsbeispiel weist die Sensoreinrichtung einen Lichtvorhang auf und die nachzuweisenden und zu "mutenden" Objekte sind Objekte, beispielsweise Paletten, die nur in einem Teil eines Lichtvorhangs nachgewiesen werden. Damit ist gemeint, dass die betreffenden Objekte nicht bei allen Lichtachsen, die den Lichtvorhang bilden, sondern nur bei einigen oder mindestens einer dieser Lichtachsen eine Unterbrechung des Lichtwegs bewirken.

Bei einem besonders bevorzugten Ausführungsbeispiel der erfindungsgemäßen Vorrichtung ist die Überbrückungseinheit dazu eingerichtet, nur mindestens einen ausgewählten Teilbereich des Schutzbereichs der Sensoreinrichtung in eine Muting-Funktionalität einzubeziehen, dergestalt, dass die Überbrückungseinheit ein Steuersignal an die gefährliche Anlage überträgt, durch welches eine gefährliche Aktivität der Anlage beendet oder abgeschaltet wird und/oder welches die Anlage, insbesondere in Abhängigkeit von Information über die Anlage und/oder einen in der Anlage laufenden Prozess, in einen sicheren Zustand bringt, wenn die Überbrückungseinheit von der Sensoreinrichtung Objektfeststellungssignale für ein Objekt erhält, das sich nicht in den ausgewählten Teilbereichen befindet.

Eine bevorzugte Variante des erfindungsgemäßen Verfahrens zeichnet sich dadurch aus, dass nur mindestens ein ausgewählter Teilbereich des Schutzbereichs der Sensoreinrichtung durch die Überbrückungseinheit in die Muting-Funktionalität einbezogen sind, dergestalt, dass die Überbrückungseinheit ein Steuersignal an die gefährliche Anlage überträgt, welches die gefährliche Anlage in einen sicheren Zustand überführt, insbesondere abschaltet, wenn die Überbrückungseinheit von der Sensoreinrichtung Objektfeststellungssignale für ein Objekt erhält, das sich nicht in den ausgewählten Teilbereichen befindet.

Das bedeutet, dass eine Schutzfeldverletzung in anderen Bereichen, mithin in den nicht ausgewählten Teilbereichen, durch die Überbrückungseinheit, insbesondere ohne Auswertung der Sicherheitsbedingungen, durchgeleitet werden kann und insbesondere zu einem Abschaltsignal für die Anlage führt. Diese Funktionalität wird auch als partielles Muting bezeichnet.

Weitere Vorteile und Eigenschaften der erfindungsgemäßen Vorrichtung und des erfindungsgemäßen Verfahrens werden im Folgenden im Zusammenhang mit den beigefügten Figuren erläutert. Hierin zeigt:
- Figur 1:: eine schematische Skizze einer gattungsgemäßen Vorrichtung;
- Figur 2:: eine schematische Darstellung eines ersten Ausführungsbeispiels einer erfindungsgemäßen Vorrichtung;
- Figur 3:: eine schematische Darstellung eines zweiten Ausführungsbeispiels einer erfindungsgemäßen Vorrichtung;
- Figur 4:: eine schematische Darstellung eines dritten Ausführungsbeispiels einer erfindungsgemäßen Vorrichtung;
- Figur 5:: eine schematische Darstellung eines vierten Ausführungsbeispiels einer erfindungsgemäßen Vorrichtung;
- Figur 6:: eine schematische Darstellung eines fünften Ausführungsbeispiels einer erfindungsgemäßen Vorrichtung; und
- Figur 7:: eine schematische Darstellung eines sechsten Ausführungsbeispiels einer erfindungsgemäßen Vorrichtung.

Gleiche und gleichwirkende Bestandteile sind in den Figuren in der Regel mit denselben Bezugszeichen versehen.

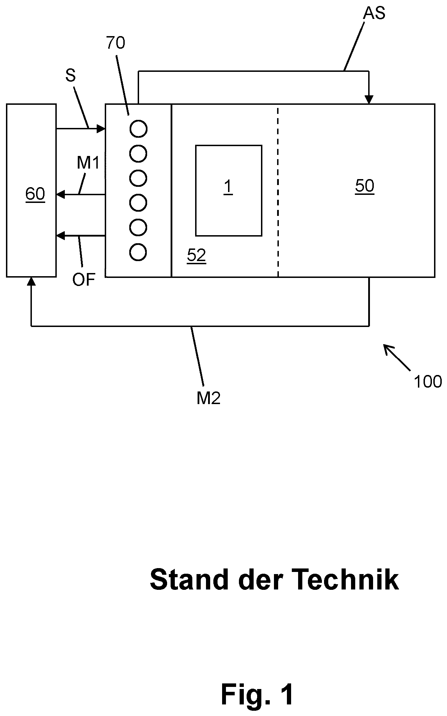

Zunächst wird mit Bezug auf Figur 1 eine Vorrichtung 100 nach dem Stand der Technik beschrieben. Die Vorrichtung 100 in Figur 1 weist eine Sensoreinrichtung 70, beispielsweise ein Lichtgitter, zum Erfassen eines Schutzbereichs 52 einer gefährlichen Anlage 50 auf. Die Sensoreinrichtung 70 ist dabei eingerichtet zum Ausgeben eines Objektfeststellungssignals OF, wenn ein Objekt in dem Schutzbereich 52 festgestellt wird. In dem in Figur 1 schematisch dargestellten Ausführungsbeispiel befindet sich ein Objekt 1 in dem Schutzbereich 52, bei dem es sich um ein zulässiges Objekt handelt, welches für eine Bearbeitung durch die Anlage 50 vorgesehen ist. Beispielsweise kann das Objekt 1 eine Palette sein, die mit der Anlage 50 mit Waren beschickt wird. Weiterhin ist eine Überbrückungseinheit 60 vorhanden, die mit der Sensoreinrichtung 70 verbunden und mindestens eingerichtet ist zum Analysieren der Objektfeststellungssignale OF, zum Analysieren von Statussignalen M2, welche die Anlage 50 betreffen und zum Generieren von Steuersignalen S für die Anlage 50 abhängig mindestens von den Objektfeststellungssignalen OF und den Statussignalen M2.

Die Sensoreinrichtung 70 ist außerdem dazu eingerichtet, ein erstes Sicherheitssignal M1, dass auch als erstes Muting-Enable-Signal bezeichnet werden kann, an die Überbrückungseinheit 60 zu übertragen. Die Anlage 50 ist dazu eingerichtet, als Statussignal ein zweites Sicherheitssignal M2, welches auch als zweites Muting-Enable-Signal bezeichnet werden kann, zu erzeugen und an die Überbrückungseinheit 60 zu übertragen. Wenn eine Muting-Bedingung nicht erfüllt ist, generiert die Überbrückungseinheit 60 in Abhängigkeit des ersten Sicherheitssignals M1 und des zweiten Sicherheitssignals M2 ein Signal S und überträgt es an die Sensoreinrichtung 70. Die Sensoreinrichtung 70 erzeugt aus dem Signal S ein Steuersignal AS und überträgt dieses an die Anlage 50. Die Anlage wird daraufhin in einen sicheren Zustand überführt. Wenn die Muting-Bedingung erfüllt ist und es sich mithin bei dem Objekt 1 um ein zulässiges Objekt handelt, welches der Anlage 50 zugeführt werden kann oder soll, unterbleibt das Signal S und infolgedessen auch das Steuersignal AS und ein Arbeitsprozess, bei dem das Objekt 1 einer Bearbeitung durch die Anlage 50 unterzogen wird, kann bestimmungsgemäß durchgeführt oder fortgeführt werden.

Weil bei dieser Vorrichtung des Stands der Technik das Steuersignal AS von der Sensoreinrichtung 70 an die Anlage 50 übertragen wird, muss die Sensoreinrichtung 70 im Hinblick auf diese Verbindung zur Anlage 50 erhöhte Anforderungen erfüllen.

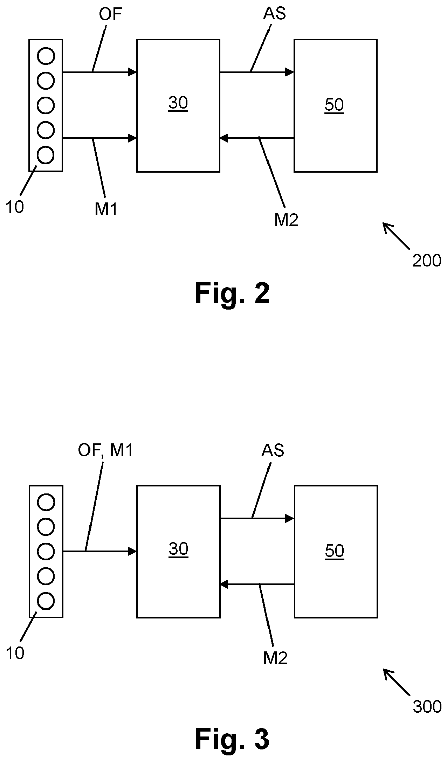

Mit Bezug auf die schematischen Figuren 2 bis 7 werden nun Ausführungsbeispiele für erfindungsgemäße Vorrichtungen beschrieben. Jede der Figuren 2 bis 7 zeigt eine Sensoreinrichtung 10, eine Überbrückungseinheit 30 und eine zu überwachende Anlage 50 mit einem Schutzbereich, der in den Figuren 2 bis 7 nicht eigens dargestellt ist.

Die in Figur 2 schematisch gezeigte erfindungsgemäße Vorrichtung 200 zum Überwachen der gefährlichen Anlage 50 weist erfindungsgemäß zunächst die Sensoreinrichtung 10 zum Erfassen eines Schutzbereichs der gefährlichen Anlage 50 auf. Die Sensoreinrichtung 10 kann beispielsweise wieder durch einen Lichtvorhang, grundsätzlich aber auch durch einen anderen Sensor oder eine Kombination von Sensoren, wie im allgemeinen Teil der Beschreibung erläutert, verwirklicht sein.

Die Sensoreinrichtung 10 ist erfindungsgemäß eingerichtet zum Ausgeben von Objektfeststellungssignalen OF, wenn Objekte 1 in dem Schutzbereich festgestellt werden. Weiterhin weist die erfindungsgemäße Vorrichtung 200 die externe Überbrückungseinheit 30 auf, die mit der Sensoreinrichtung 10 verbunden und die erfindungsgemäß mindestens eingerichtet ist zum Analysieren der Objektfeststellungssignale OF, zum Analysieren von Statussignalen M2, welche die gefährliche Anlage 50 betreffen und zum Generieren von Steuersignalen AS für die gefährliche Anlage 50 abhängig mindestens von den Objektfeststellungssignalen OF und den Statussignalen M2. Erfindungsgemäß ist die Überbrückungseinheit 30 außerdem eingerichtet zum Übertragen der Steuersignale AS an die gefährliche Anlage 50 oder eine Steuerung der gefährlichen Anlage 50.

In dem gezeigten Ausführungsbeispiel ist die externe Überbrückungseinheit 30 eingerichtet zum direkten Übertragen der Steuersignale AS an die Anlage 50 oder die Steuerung der Anlage 50. Die Anlage 50 oder deren Steuerung erhält die Steuersignale AS ausschließlich von der Überbrückungseinheit 30, die als selbständiges externes Gerät, aber auch in einer sicheren Anlagensteuerung oder einer sicheren Prozesssteuerung gebildet sein kann.

In dem gezeigten Ausführungsbeispiel ist die Überbrückungseinheit 30 weiterhin dazu eingerichtet, ein Steuersignal AS, welches die Anlage 50 in einen sicheren Zustand bringt, zu unterdrücken, wenn die Überbrückungseinheit 30 von der Sensoreinrichtung 10 ein erstes Sicherheitssignal M1 und von der Anlage 50 als Statussignal ein zweites Sicherheitssignal M2 erhält und wenn das erste Sicherheitssignal M1 und das zweite Sicherheitssignal M2 eine Sicherheitsbedingung erfüllen. Die Überbrückungseinheit 30 ist außerdem dazu eingerichtet, für das Prüfen der Sicherheitsbedingung eine Zeitdifferenz zwischen dem ersten Sicherheitssignal M1 und dem zweiten Sicherheitssignal M2 und eine zeitliche Reihenfolge des ersten Sicherheitssignals M1 und des zweiten Sicherheitssignals M2 zu bewerten. Die Sensoreinrichtung 10 enthält keine logischen Einrichtungen, die Steuersignale AS für die Anlage 50 generieren. Im Ausführungsbeispiel der Figur 2 sind das Objektfeststellungssignal OF und das erste Sicherheitssignal M1 separate Signale.

Wenn das erste Sicherheitssignal M1, also das erste Muting-Enable-Signal, und das zweite Sicherheitssignal M2, also das zweite Muting-Enable-Signal, die Sicherheitsbedingung, mithin die Muting-Bedingung, nicht erfüllen, erkennt eine Muting-Logik ein unzulässiges Objekt im dem Schutzbereich der Anlage 50 und sendet das Steuersignal AS an die Anlage 50. Durch das Steuersignal AS kann die Anlage 50, insbesondere in Abhängigkeit von Information über die Anlage 50 und/oder einen in der Anlage 50 aktuell laufenden Prozess, in einen sicheren Zustand gebracht werden. Ein sicherer Zustand kann dabei beispielsweise verwirklicht werden durch eine im Vergleich zu einem Normalbetrieb langsamere Bewegung von beweglichen Teilen der Anlage 50, durch Aufsuchen von ausgewählten Positionen und/oder sicheren Stellungen von beweglichen Teilen der Anlage 50 und/oder durch Verharren in ausgewählten Bewegungszuständen von beweglichen Teilen der Anlage 50. Es ist aber auch möglich, dass eine gefährliche Aktivität der Anlage 50 durch das Steuersignal AS beendet oder abgeschaltet wird oder dass die Anlage 50 insgesamt abgeschaltet wird.

Die erfindungsgemäße Vorrichtung 300 der Figur 3 unterscheidet sich von der erfindungsgemäßen Vorrichtung 200 der Figur 2 dadurch, dass das Objektfeststellungssignal OF und das erste Sicherheitssignal M1 ein und dasselbe Signal sind.

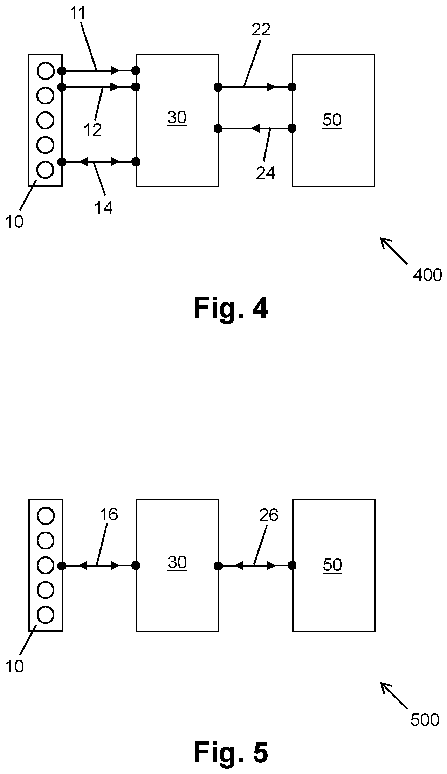

Die Figuren 4 und 5 zeigen Ausführungsbeispiele für die Verbindungen zwischen der Sensoreinrichtung 10 und der Überbrückungseinheit 30 einerseits und zwischen der Überbrückungseinheit 30 und der zu überwachenden Anlage 50 andererseits.

Bei der erfindungsgemäßen Vorrichtung 400 der Figur 4 ist die Sensoreinrichtung 10 mit der Überbrückungseinheit 10 zunächst durch zwei sichere Schaltausgänge 11, 12, bei denen es sich insbesondere um OSSDs handeln kann, verbunden. Die Verbindungen 11, 12 können drahtgebundene oder drahtlose Verbindungen sein. Außerdem ist die Sensoreinrichtung 10 mit der Übertragungseinheit 30 über eine bidirektionale kabelgebundene Signalleitung 14 verbunden, über welche eine Konfiguration der Sensoreinrichtung 10 verändert werden kann. Die Überbrückungseinheit 30 ist im Beispiel der Figur 4 mit der Anlage 50 über eine erste OSSD-Leitung 22 und eine zweite OSSD-Leitung 24 verbunden. Über die zweite OSSD-Leitung 24 erhält die Überbrückungseinheit 30 erfindungsgemäß Statussignale und insbesondere das zweite Sicherheitssignal M2 von der Anlage 50. Über die erste OSSD-Leitung 22 überträgt die Überbrückungseinheit 30, wenn die Sicherheits- oder Muting-Bedingung nicht erfüllt ist, ein geeignetes Steuersignal AS an die Anlage 50, welches die Anlage 50 in einen sicheren Zustand überführt.

Bei der erfindungsgemäßen Vorrichtung 500 der Figur 5 ist die Sensoreinrichtung 10 mit der Überbrückungseinheit 30 über ein bidirektionales Sicherheitsinterface 16 verbunden und die Überbrückungseinheit 30 ist mit der Anlage 50 ebenfalls über ein bidirektionales Sicherheitsinterface 26 verbunden. Das Sicherheitsinterface 16 ermöglicht einerseits das erfindungsgemäße Übertragen von Objektfeststellungssignalen OF und des ersten Sicherheitssignals M1 von der Sensoreinrichtung 10 an die Überbrückungseinheit 30 und erlaubt auch eine Konfiguration der Sensoreinrichtung 10 durch die Überbrückungseinheit 30. Das Sicherheitsinterface 26 ermöglicht das erfindungsgemäße Übertragen von Steuersignalen AS durch die Überbrückungseinheit 30 an die Anlage 50 und auch das erfindungsgemäße Übermitteln des zweiten Sicherheitssignals M2, mithin von Statussignalen der Anlage 50, an die Übertragungseinheit 30.

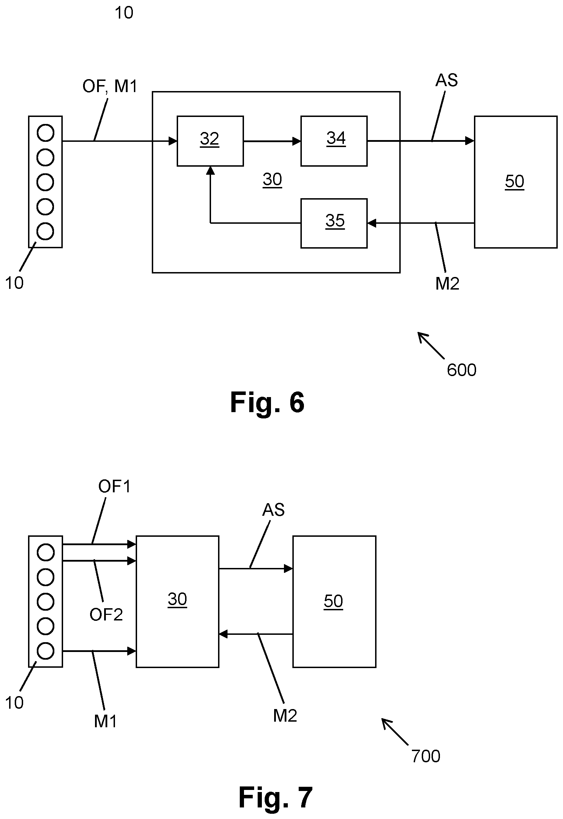

Bei der erfindungsgemäßen Vorrichtung 600 der Figur 6 sind weitere Einzelheiten der Überbrückungseinheit 30 dargestellt. Die Überbrückungseinheit 30 weist dort eine logische Einheit 32 auf, in der die Prüfung durchgeführt wird, ob ein von der Sensoreinrichtung 10 erhaltenes erstes Sicherheitssignal M1 und ein von der Anlage erhaltenes zweites Sicherheitssignal M2 eine Sicherheitsbedingung erfüllen. Außerdem sind zur Synchronisation mit einem Prozess der Anlage 50 eine erste Verzögerungseinheit 34 zum Verzögern des Steuersignals AS und eine zweite Verzögerungseinheit 35 zum Verzögern des zweiten Sicherheitssignals M2 vorhanden. Die logische Einheit 32, die erste Verzögerungseinheit 34 und die zweite Verzögerungseinheit 35 können beispielsweise durch einen Mikrocontroller verwirklicht sein.

Bei weiteren Varianten ist ein Erfassungsbereich der Sensoreinrichtung 10 konfigurierbar und veränderbar. Dann können zum Beispiel eine Größe und/oder eine räumliche Anordnung des Schutzbereichs eingestellt werden und/oder ein Objekt kann in unterschiedlichen Bereichen des Schutzbereichs differenziert nachgewiesen werden. Beispielsweise können die Objektfeststellungssignale bei Lichtvorhängen Information über einen Ort eines Objekts innerhalb eines Schutzbereichs der Anlage enthalten. Die Überbrückungseinheit kann dann vorteilhaft auch dazu eingerichtet sein, das erste Sicherheitssignal M1 und/oder das Steuersignal auch in Abhängigkeit der Information über einen Ort eines Objekts innerhalb eines Schutzbereichs zu generieren. Eine Anwendung solch einer Konfiguration ist beispielsweise eine fortgeführte Absicherung von Personen auf einer Transportpalette oder auf deren Ladung, auch wenn das Sicherheitssystem eine gültige Muting-Enable-Signal-Sequenz erkannt hat, die Überbrückungseinheit 30 mithin die Sicherheitsbedingung geprüft und bejaht hat und das System somit "gemutet" ist. Wenn der Lichtvorhang 10 alle Strahlachsen-Informationen zur Überbrückungseinheit 30 in Reaktionszeit überträgt, kann die Überbrückungseinheit 30 die partiellen Muting-Bereiche selbst aufteilen, auswerten und die Anlage 50 entsprechend steuern.

Bei der erfindungsgemäßen Vorrichtung 700 der Figur 7 ist die Sensoreinrichtung 10 ein Lichtgitter, welches nur Objektdetektionssignale OF1, OF2 an die Überbrückungseinheit 30 sendet. Die Überbrückungseinheit 30 kann dem Lichtgitter 10 sodann Konfigurationsdaten über partielle Schutzfeldbereiche, d.h. die Muting- und Non-Muting-Bereiche innerhalb des Schutzfelds übermitteln. Nach erfolgter Konfiguration des Lichtgitters 10 kann dieses Objektdetektionen pro Bereich separat an die Überbrückungseinheit 30 senden. Im Beispiel der Figur 7 ist das Lichtgitter so konfiguriert, dass ein erstes Objektfeststellungssignal OF1 ausgegeben wird, wenn sich ein Objekt in einem ersten Bereich des Lichtgitters befindet und dass ein zweites Objektfeststellungssignal OF2 ausgegeben wird, wenn sich ein Objekt in einem zweiten Bereich des Lichtgitters befindet.

Entweder das erste Objektfeststellungssignal OF1 oder das zweite Objektfeststellungssignal OF2 können als erstes Sicherheitssignal M1 verwendet werden oder das erste Sicherheitssignal M1 kann entweder aus dem ersten Objektfeststellungssignal OF1 oder aus dem zweiten Objektfeststellungssignal OF2 abgeleitet werden. Mit der Vorrichtung 700 der Figur 7 kann ein sogenanntes partielles Muting verwirklicht werden, bei dem ein Objekt in unterschiedlichen Bereichen des Schutzbereichs differenziert nachgewiesen wird. Die Überbrückungseinheit 30 kann dann vorteilhaft auch dazu eingerichtet sein, das Steuersignal auch in Abhängigkeit der Information über einen Ort eines Objekts innerhalb eines Schutzbereichs zu generieren.

Die vorliegende Erfindung stellt eine Vorrichtung und ein Verfahren zum Überwachen einer gefährlichen Anlage bereit, bei denen im Vergleich zum Stand der Technik kostengünstigere Komponenten verwendet werden können und bei denen Vorteile im Hinblick auf die Skalierbarkeit erreicht werden.

### Referenzen und Abkürzungen

- IOL Safety: IO-Link Safety
https://de.wikipedia.org/wiki/IO-Link
- OSSD: Output signal switching device
https://en.wikipedia.org/wiki/Output_signal_switching_device)
- PROFINET: Process Field Network
https://de.wikipedia.org/wiki/Profinet

EP 2306063 B2
EP 3910227 B1
EP 3910228 B1
EP 3910229 A1
EP 4137735 B1

### Bezugszeichenliste

- 1: Objekt, beispielsweise Palette
- 10: Sensoreinrichtung
- 11: erste OSSD-Leitung
- 12: zweite OSSD-Leitung
- 14: bidirektionale Signalleitung
- 16: Sicherheitsschnittstelle, Sicherheitsinterface
- 22: Leitung oder Funkstrecke, beispielsweise OSSD-Leitung
- 24: Leitung oder Funkstrecke, beispielsweise OSSD-Leitung
- 26: Sicherheitsschnittstelle, Sicherheitsinterface
- 30: Überbrückungseinheit
- 32: logische Einheit, beispielsweise Mikrocontroller
- 34: erste Verzögerungseinheit
- 35: zweite Verzögerungseinheit
- 50: Anlage, insbesondere Maschine, beispielsweise Blechumformmaschine
- 52: Schutzbereich der Anlage
- 60: Überbrückungseinheit
- 70: Sensoreinrichtung
- 100: Vorrichtung nach dem Stand der Technik
- 200: erfindungsgemäße Vorrichtung
- 300: erfindungsgemäße Vorrichtung
- 400: erfindungsgemäße Vorrichtung
- 500: erfindungsgemäße Vorrichtung
- 600: erfindungsgemäße Vorrichtung
- 700: erfindungsgemäße Vorrichtung
- AS: Steuersignal, Anlagenschaltsignal, insbesondere Anlagenabschaltsignal
- M1: erstes Sicherheitssignal, erstes Muting-Signal
- M2: zweites Sicherheitssignal, zweites Muting-Signal
- OF: Objektfeststellungssignal
- OF1: erstes Objektfeststellungssignal, gehört zu erstem Bereich, der von Sensoreinrichtung 10 überwacht wird
- OF2: zweites Objektfeststellungssignal, gehört zu zweitem Bereich, der von Sensoreinrichtung 10 überwacht wird

## Patentansprüche

1. Vorrichtung zum Überwachen einer gefährlichen Anlage,
mit einer Sensoreinrichtung (10) zum Erfassen eines Schutzbereichs (52) der gefährlichen Anlage (50), wobei die Sensoreinrichtung (10) eingerichtet ist zum Ausgeben mindestens von Objektfeststellungssignalen (OF), wenn Objekte (1) in dem Schutzbereich (52) festgestellt werden,
mit einer externen Überbrückungseinheit (30), die mit der Sensoreinrichtung (10) verbunden ist und mindestens eingerichtet ist
• zum Analysieren der Objektfeststellungssignale (OF),
• zum Analysieren von Statussignalen (M2), welche die gefährliche Anlage (50) betreffen,
• zum Generieren von Steuersignalen (AS) für die gefährliche Anlage (50) abhängig mindestens von den Objektfeststellungssignalen (OF) und den Statussignalen (M2),
**dadurch gekennzeichnet,**
**dass** die externe Überbrückungseinheit (30) eingerichtet ist zum Übertragen der Steuersignale (AS) an die gefährliche Anlage (50) oder eine Steuerung der gefährlichen Anlage (50).

2. Vorrichtung nach Anspruch 1,
**dadurch gekennzeichnet,**
**dass** die externe Überbrückungseinheit (30) eingerichtet ist zum direkten und/oder ausschließlichen Übertragen der Steuersignale (AS) an die gefährliche Anlage (50) oder die Steuerung der gefährlichen Anlage (50).

3. Vorrichtung nach Anspruch 1 oder 2,
**dadurch gekennzeichnet,**
**dass** die Überbrückungseinheit (30) mindestens eine der folgenden Eigenschaften verwirklicht:
• die Überbrückungseinheit (30) ist als selbständiges Gerät gebildet;
• die Überbrückungseinheit (30) ist als separates Sicherheitsmodul gebildet;
• die Überbrückungseinheit (30) ist in einem externen Sicherheitsmodul gebildet;
• die Überbrückungseinheit (30) ist in einem Sicherheitsinterface gebildet;
• die Überbrückungseinheit (30) ist in einem Sicherheitsgateway gebildet;
• die Überbrückungseinheit (30) ist in einem Sicherheitsmaster gebildet;
• die Überbrückungseinheit (30) ist in einer Sicherheitssteuerung gebildet;
• die Überbrückungseinheit (30) ist in einer sicheren Anlagensteuerung oder einer sicheren Prozesssteuerung gebildet,
• die Überbrückungseinheit (30) erfüllt die, insbesondere normierten, Anforderungen an ein sicheres Gerät oder ist eine sichere Überbrückungseinheit.

4. Vorrichtung nach einem der Ansprüche 1 bis 3,
**dadurch gekennzeichnet,**
**dass** die Überbrückungseinheit (30) dazu eingerichtet ist, ein Steuersignal (AS), welches die Anlage (50) in einen sicheren Zustand bringt, zu unterdrücken, wenn die folgenden Bedingungen erfüllt sind:
die Überbrückungseinheit (30) erhält von der Sensoreinrichtung (10) ein erstes Sicherheitssignal (OF, M1),
die Überbrückungseinheit (30) erhält von der Anlage (50) ein zweites Sicherheitssignal (M2),
das erste Sicherheitssignal (OF, M1) und das zweite Sicherheitssignal (M2), erfüllen eine Sicherheitsbedingung.

5. Vorrichtung nach Anspruch 4,
**dadurch gekennzeichnet,**
**dass** die Überbrückungseinheit (30) dazu eingerichtet ist, für das Prüfen der Sicherheitsbedingung eine oder mehrere der folgenden Eigenschaften zu bewerten:
• eine Zeitdifferenz zwischen dem ersten Sicherheitssignal (M1) und dem zweiten Sicherheitssignal (M2),
• eine Zeitdifferenz zwischen einem Start des ersten Sicherheitssignals (M1) und einem Ende des ersten Sicherheitssignals (M1),
• eine Zeitdifferenz zwischen einem Start des zweiten Sicherheitssignals (M2) und einem Ende des zweiten Sicherheitssignals (M2),
• eine Zeitdifferenz zwischen einem Start des ersten Sicherheitssignals (M1) und einem Start des zweiten Sicherheitssignals (M2),
• eine Zeitdifferenz zwischen einem Ende des ersten Sicherheitssignals (M1) und einem Ende des zweiten Sicherheitssignals (M2),
• eine Zeitdifferenz zwischen einem Start des ersten Sicherheitssignals (M1) und einem Ende des zweiten Sicherheitssignals (M2),
• eine Zeitdifferenz zwischen einem Ende des ersten Sicherheitssignals (M1) und einem Start des zweiten Sicherheitssignals (M2),
• eine zeitliche Reihenfolge des ersten Sicherheitssignals (M1) und des zweiten Sicherheitssignals (M2).

6. Vorrichtung nach einem der Ansprüche 1 bis 5,
**dadurch gekennzeichnet,**
**dass** die Überbrückungseinheit (30) dazu eingerichtet ist, die erfindungsgemäße Funktionalität für mehrere Sensoreinrichtungen und mehrere Anlagen bereitzustellen.

7. Vorrichtung nach einem der Ansprüche 4 bis 6,
**dadurch gekennzeichnet,**
**dass** die Überbrückungseinheit (30) dazu eingerichtet ist, Parameter für die Sicherheitsbedingung, beispielsweise
zeitliche Differenzen des ersten Sicherheitssignals (M1) und des zweiten Sicherheitssignals (M2),
zeitliche Reihenfolge des ersten Sicherheitssignals (M1) und des zweiten Sicherheitssignals (M2),
zeitliche Verzögerungen des ersten Sicherheitssignals (M1) und/oder des zweiten Sicherheitssignals (M2),
für mehrere an die Überbrückungseinheit (30) angeschlossene Sensoreinrichtungen (10) und mehrere Anlagen (50) zu konfigurieren und zu speichern.

8. Vorrichtung nach einem der Ansprüche 4 bis 7,
**dadurch gekennzeichnet,**
**dass** das Objektfeststellungssignal (OF) und das erste Sicherheitssignal (M1) ein und dasselbe Signal sind.

9. Vorrichtung nach einem der Ansprüche 4 bis 8,
**dadurch gekennzeichnet,**
**dass** das Objektfeststellungssignal (OF) und das erste Sicherheitssignal (M1) separate Signale sind.

10. Vorrichtung nach einem der Ansprüche 4 bis 9,
**dadurch gekennzeichnet,**
**dass** die Überbrückungseinheit (30), insbesondere zur Synchronisation mit einem Prozess der Anlage (50), eine erste Verzögerungseinheit (34) zum Verzögern des Steuersignals (AS) und/oder eine zweite Verzögerungseinheit (35) zum Verzögern des zweiten Sicherheitssignals (M2) aufweist.

11. Vorrichtung nach einem der Ansprüche 4 bis 10,
**dadurch gekennzeichnet,**
**dass** die Überbrückungseinheit (30) zum Konfigurieren von Parametern für eine Sicherheitsbedingung eine Verbindungsschnittstelle, insbesondere zu einer übergeordneten Steuerung aufweist.

12. Vorrichtung nach einem der Ansprüche 1 bis 11,
**dadurch gekennzeichnet,**
**dass** die Sensoreinrichtung (10) keine logischen Einrichtungen enthält, die Steuersignale (AS) für die Anlage (50) generieren.

13. Vorrichtung nach einem der Ansprüche 1 bis 12,
**dadurch gekennzeichnet,**
**dass** die Sensoreinrichtung (10) einen oder mehrere der folgenden Sensoren aufweist:
• optischer Sensor
• energetischer optischer Sensor
• ein-, zwei- oder dreidimensional scannender optischer Sensor
• Lichtvorhang
• Lichtschranke
• Kamerasensor
• Ultraschallsensor
• kapazitiver Sensor
• induktiver Sensor
• abstandsmessender Sensor,
und/oder dass die Sensoreinrichtung (10) die, insbesondere normierten, Anforderungen an ein sicheres Gerät erfüllt und/oder dass mindestens einer der Sensoren der Sensoreinrichtung (10) ein Sicherheitssensor ist.

14. Vorrichtung nach einem der Ansprüche 1 bis 13,
**dadurch gekennzeichnet,**
**dass** zwischen der Überbrückungseinheit (30) und der Sensoreinrichtung (10) eine bidirektionale Datenverbindung vorhanden ist, über welche eine Konfiguration der Sensoreinrichtung (10) veränderbar ist.

15. Vorrichtung nach einem der Ansprüche 1 bis 14,
**dadurch gekennzeichnet,**
**dass** eine Verbindung zwischen der Sensoreinrichtung (10) und der Überbrückungseinheit (30) eine oder mehrere oder eine Kombination von einer oder mehreren der folgenden Verbindungen aufweist:
sichere Schaltausgänge (11, 12),
OSSD (11, 12),
kabelgebundene Signalleitung (14),
drahtgebundenes oder drahtloses Sicherheitsinterface (16) mit Sicherheitsprotokoll.

16. Vorrichtung nach einem der Ansprüche 4 bis 15,
**dadurch gekennzeichnet,**
**dass** die Objektfeststellungssignale der Sensoreinrichtung (10) Information über einen Ort eines Objekts innerhalb des Schutzbereichs (52) enthalten und dass die Überbrückungseinheit (30) dazu eingerichtet ist, das Steuersignal (AS) auch in Abhängigkeit der Information über einen Ort eines Objekts innerhalb des Schutzbereichs (52) zu generieren.

17. Vorrichtung nach Anspruch 16,
**dadurch gekennzeichnet,**
**dass** die Sensoreinrichtung (10) dazu eingerichtet oder konfiguriert ist, das erste Sicherheitssignal (M1) nur dann bereitzustellen, wenn sich ein Objekt in einem festzulegenden Teil des Schutzbereichs (52) befindet und/oder dass die Sensoreinrichtung (10) dazu eingerichtet oder konfiguriert ist, das erste Sicherheitssignal (M1) niemals bereitzustellen, wenn sich ein Objekt in einem anderen festzulegenden Teil des Schutzbereichs (52) befindet.

18. Vorrichtung nach einem der Ansprüche 16 oder 17,
**dadurch gekennzeichnet,**
**dass** die Überbrückungseinheit (30) dazu eingerichtet ist, nur mindestens einen ausgewählten Teilbereich des Schutzbereichs (52) der Sensoreinrichtung (10) in eine Muting-Funktionalität einzubeziehen, dergestalt, dass die Überbrückungseinheit (30) ein Steuersignal (AS) an die gefährliche Anlage (50) überträgt, durch welches eine gefährliche Aktivität der Anlage (50) beendet oder abgeschaltet wird und/oder welches die Anlage (50), insbesondere in Abhängigkeit von Information über die Anlage und/oder einen in der Anlage laufenden Prozess, in einen sicheren Zustand bringt, wenn die Überbrückungseinheit (30) von der Sensoreinrichtung (10) Objektfeststellungssignale für ein Objekt erhält, das sich nicht in den ausgewählten Teilbereichen befindet.

19. Verfahren zum Überwachen eines Schutzbereichs bei einer gefährlichen Anlage (50),
bei dem eine Sensoreinrichtung (10) den Schutzbereich (52) der gefährlichen Anlage (50) mindestens teilweise erfasst,
bei dem die Sensoreinrichtung (10) Objektfeststellungssignale (OF) ausgibt, wenn Objekte (1) im Schutzbereich (52) festgestellt werden und
bei dem eine mit der Sensoreinrichtung (10) verbundene externe Überbrückungseinheit (30) die Objektfeststellungssignale (OF) und Statussignale (M2), welche die gefährliche Anlage (50) betreffen, analysiert und Steuersignale (AS) für die gefährliche Anlage (50) abhängig mindestens von den Objektfeststellungssignalen (OF) und den Statussignalen (M2) generiert, **dadurch gekennzeichnet,**
**dass** die externe Überbrückungseinheit (30) die Steuersignale (AS), insbesondere direkt, an die gefährliche Anlage (50) oder eine Steuerung der gefährlichen Anlage (50) überträgt.

20. Verfahren nach Anspruch 19,
**dadurch gekennzeichnet,**
**dass** durch das Steuersignal (AS) eine gefährliche Aktivität der Anlage (50) beendet oder abgeschaltet wird und/oder
**dass** die Anlage (50) durch ein Steuersignal (AS), insbesondere in Abhängigkeit von Information über die Anlage und/oder einen in der Anlage laufenden Prozess, in einen sicheren Zustand gebracht wird.

21. Verfahren nach Anspruch 20,
**dadurch gekennzeichnet,**
**dass** ein Übergang in den sicheren Zustand und/oder der sichere Zustand durch mindestens eine der folgenden Aktivitäten verwirklicht wird:
• Übergang zu einer im Vergleich zu einem Normalbetrieb langsameren Bewegung von beweglichen Teilen der Anlage (50);
• Aufsuchen von ausgewählten Positionen und/oder sicheren Stellungen von beweglichen Teilen der Anlage (50);
• Verharren in ausgewählten Bewegungszuständen von beweglichen Teilen.
